# EUROPEAN PATENT APPLICATION

(11) **EP 3 722 357 A1**
(43) Date of publication of application: **14.10.2020**
(21) Application number: 20164396.2
(22) Date of filing: 20.03.2020
(51) Int. Cl.: C08J 9/00, C08J 9/28

(54) **CHITOSAN OPEN POROUS MATERIALS CONTAINING HYDROPHILIC AND/OR HYDRO-PHOBIC FUNCTIONAL GROUPS**

(30) Priority: 10.04.2019 DE 102019109456
(71) Applicant: Deutsches Zentrum für Luft- und Raumfahrt e.V., 51147 Köln (DE)
(72) Inventor: Milow, Barbara, 50354 Hürth (DE); Ganesan, Kathirvel, 51147 Cologne (DE)
(74) Representative: dompatent von Kreisler Selting Werner - Partnerschaft von Patent- und Rechtsanwälten mbB

(57) **Abstract**

The present invention relates to methods for the syntheses of open porous materials in specific aerogel, cryogel and xerogels of chemically modified chitosan polymer or oligomer containing hydrophilic and/or hydrophobic functional groups in different forms such as monoliths, fibers, sheets, films and beads/µ-particles and products obtained by said methods. Chitosan is chemically modified by treating the amine functional groups in chitosan with epoxy functional groups of mono- and diglycidyl ether derivatives of hydrophilic and/or hydrophobic agents.

## Description

The present invention relates to methods for the synthesis of open porous materials in specific aerogels, cryogels and xerogels of chemically modified chitosan polymers or oligomers containing hydrophilic and/or hydrophobic functional groups in different forms such as monoliths, fibers, sheets, films and beads/µ-particles and products obtained from said methods. Chitosan is chemically modified by treating the amine functional groups in chitosan with epoxy functional groups of mono- and diglycidyl ether derivatives of hydrophilic and/or hydrophobic agents.

Chitin is an abundant polysaccharide, which comes from renewable resources. One of the important derivatives of chitin is chitosan derived after deacetylation. Chitosan has advantages over chitin polymer because it provides water solubility under mild acidic condition after protonation of amine functional group. Open porous materials of chitosan could receive great attention in materials science because of the light-weight property. Open porous networks can offer the infiltration of soft matter and separation of the mixture of components. In addition to porous networks, chitosan polymer has advantages with the active chelating functional groups, -OH and -NH₂ which can act as hosts in applications where high chemical affinity to guest molecules is demanding. Open porous materials of chitosan polymer can be useful for filter, purification and separation techniques, biological carrier agents, biomaterial, antimicrobial agents, haemostasis and wound dressings, composites and ceramics preparation and for heat and/ sound.

The production of new chemical derivatives of open porous materials of chitosan with desired properties can enhance the usage of the polymer in materials science. The -NH₂ functional groups in chitosan can be easily modified using green reagents.

For instance, EP 3 061 772 B1 and DE 10 2015 203 384 B4 disclose the conversion of -NH₂ functional groups in chitosan to ureido chelating functional group by treating chitosan with urea in aqueous acidic medium. Mostly, the hydrophilic and/or hydrophobic agents were anchored with the -NH₂ functional groups of chitosan whereby the anchoring groups were isocyanate, aldehyde or epoxy. Among these anchoring groups, epoxy-based reagents show very less toxicity. In comparison with other anchoring functional group such as aldehyde and isocyanate, epoxy-based addition reaction is more convenient, environmentally friendly and odourless products can be obtained.

The preparation of suitable odourless cosmetic products based on hydrophilic crosslinked chitosan foams is described in DE 10 313 427 B4 and JP 4125047 B2, in which the diglycidyl ether derivatives of aliphatic compounds were used as crosslinking agents.

In another study, diglycidyl ether of polyethylene glycol was used to prepare crosslinked chitosan non-porous film which showed swelling behaviour in water (Journal of Applied Polymer Science, 107 (2008) 3823-3830) and enzymatic degradation (Carbohydrate Polymers 80 (2010) 260-265).

DE10313427B4 relates to the formulation of cryogel preparation of chitosan from different acids in which the chitosan gel network was formed by treating the aqueous acidic solution of chitosan with diepoxy-based cross-linking agents. In principle, the authors wanted to prepare the porous materials which can be used in biological applications whereby the products should not give any vapors/smell of the reagents. They prepared the gel network from diepoxy-crosslinked chitosan and employed the freezing-drying method. They do not take care of the cleanliness of the wet gel body. According to their formulation, once the gel network was formed or crosslinked a solution was prepared. They took the wet hydrogel or the crosslinked gel network as solution and let the ice crystals to grow in the gel body by freezing at <-30 °C as a result the gel or the solution turned to become solid. Then freeze-drying was employed in which the ice crystals were sublimed under vacuum to prepare the porous materials of diepoxy-crosslinked chitosan material. In their products: (a) the excess reagent may be present in the gel body and the acid which was used for the chitosan dissolution must also be present in the gel body; (b) The amine groups in the chitosan chain can be still protonated as the acid molecules were in the gel medium. It can also be said that chitosan was not regenerated from solution; (c) the unreacted epoxy groups from crosslinking agents were still kept as such which may prone to react further when it was exposed to contact with reagent or surface; (d) the product when it was exposed to water medium, it may take large amount of water as the materials have ammonium ions, acidic medium and crosslinked functional groups. As a result, the product can swell to a larger scale in comparison with the dried product dimension; (e) freeze drying provides bigger pores due to the ice crystals formation.

According to DE69226203T2, summary of example 3 (page 39) a solution was prepared using acetic acid about 3 -4 vol %. hydrogel; granulates were prepared by treating with NaOH solution. A solution was prepared using acetic acid (3-4 vol %) in water. The hydrogel was prepared using 10 % NaOH solution. NaOH was removed by washing with distilled water. Water was exchanged with Toluene. Crosslinking with 2,4-TDI was achieved after post gelation. Toluene was used as medium in the gel body. Vacuum oven was used to dry. After drying under vacuum, the products were ground to the granulate size of 0.42 mm (40 mesh or less). Porous materials were prepared as per the experimental data and statements. On page 46 of said document, a comparative example is reported. Chitosan was dissolved in formic acid or acetic acid and treated with NaOH solution. By this way the chitosan pellets were prepared. Those coagulated pellets were cross-linked with diisocyanate reagents after washing with acetone. This method was employed by adapting the procedure from Reference "Heavy metal adsorbing agent" cited herein. Such method of functionalization is also called POST Gelation method. A first gel network was prepared and then the solid network can be functionalized with the suitable reagents. Toluene is a high boiling solvent and has very low vapor pressure. The solvents of this kind were also used to prepare the aerogels or high porous materials after vacuum drying or freeze drying. Example of such a solvent is tert.-butanol. The present inventor has also prepared xerogels of the kind using isopropanol and dried under ambient condition (no vacuum). The materials provided mesopores and specific surface area of about 100 m²/g (see reference: Materials and Design 92 (2016) 345-355, "Design of aerogels, cryogels and xerogels of cellulose with hierarchical porous structures"). The functionalization of post-gelation products provides different properties than functionalization in pre-gelation products or in solution. The functionalization in pre-gelation products or in solution provide highly homogeneous products and the aggregation to form gel would be homogeneous whereas the functionalization of post-gelation products is based on the diffusion of ions and reagents through the nanoporous network. The resulting products will be completely different.

According to EP1994946A1 Chitosan hydrogels were prepared by the following method: Dissolving chitosan first in aqueous acetic acid medium and then precipitated under alkaline medium using NaOH. The powder was again dissolved in aqueous hydrochloric acid medium and treated with PEGDGE at 40-45 °C. The mixture was left to react for 14 h. Then the hydrogel was washed with water and freeze dried. According to their claim, the crosslinking or functionalization occurred at C-6 position which was proved by the authors by IR spectra not being part of the specification. In the IR spectra, the authors find that the polysaccharides before and after functionalization showed same spectral signals, but one difference is at around 1100-1150 cm-1. This band is corresponding to the ether bonds, according to statement [0016].

Comments: (a) The gel was not regenerated. (b) The material was not carefully analyzed. PEGDGE-functionalized chitosan gives strong band at this region 1100-1150 cm-1 in FTIR as it has more O-CH₂-CH₂-O bonds. This cannot be the only vibrational band to follow. According to their claim, the product is C-6 position functionalized chitosan gels. The hydrogel products were not regenerated by alkaline solution which can convert the epoxy rings to alcohol and the aggregation of chitosan chains in a different way.

It is the object of the present invention to provide open porous materials, in specific aerogels, cryogels and xerogels, of chemically modified chitosan polymers or oligomer containing hydrophilic and/or hydrophobic functional groups. Particularly, the present invention should provide a porous material which can be used as reusable material in filter applications or antimicrobial applications and especially a porous material, which can be tuned by chemical modification very specifically to act against specific bacteria.

In a first embodiment of the invention the problem is solved by an open porous material of chitosan or chitin containing hydrophilic and/or hydrophobic groups, wherein the material is obtainable by treating amine functional groups in chitosan with epoxy functional groups of mono- and/or diglycidyl ether derivatives of hydrophilic and/or hydrophobic agents and subsequently forming an open porous material from said chitosan or chitin.

Preferably, the open porous material is an aerogel, a cryogel or a xerogel.

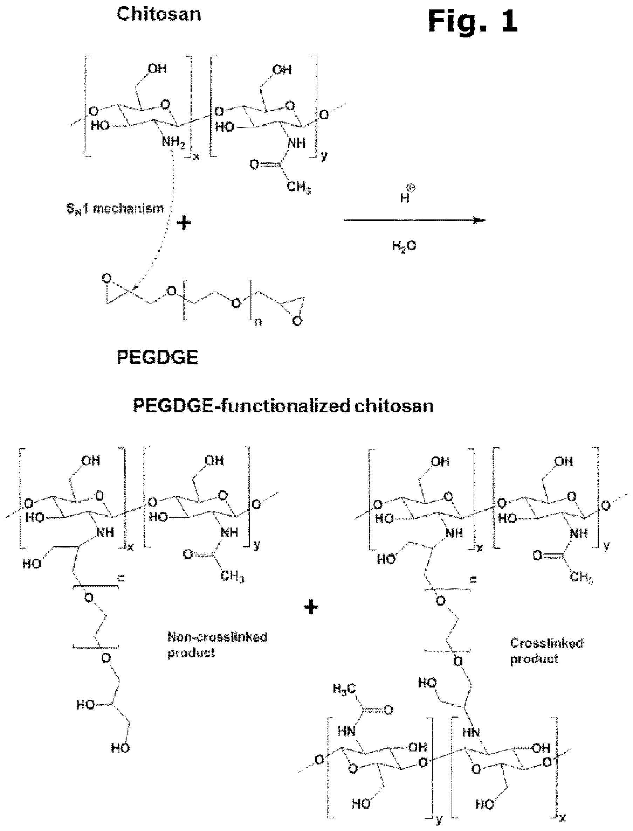

The present invention is formulated to prepare the completely pure chitosan-based gel materials. In the formulation, though the gel networks or functionalized chitosan solution (partially crosslinked chitosan or non-crosslinked chitosan solution - please refer the scheme in Fig. 1) were formed during the reaction condition, the gel medium or the functionalized-chitosan solution was treated with aqueous or alcoholic NaOH solution. Advantages by this NaOH treatment may be summarized as following:
(a) unreacted epoxide can be converted to alcohol by ring opening of epoxy;
(b) acidic medium can be neutralized;
(c) the aggregation or self-assembly of functionalized chitosan can be induced to form the complete gel network due to the change in pH value raising above the pKa value of chitosan amine groups (6.3).
   This means that chitosan was protonated to make it soluble in water and then regenerated. As the regeneration occurred, randomly connected functionalized chitosan network was formed. The aggregation of chitosan chains happened for two reasons: Van der Waals interaction between chitosan chains and crosslinked covalent bonding between chitosan chains. The properties of the regenerated chitosan have (100 %) properties of chitosan, may be additional properties of functionalized chemical moiety. In comparison with the prior art, the regenerated chitosan products are completely distinct from the products which are mentioned in the present invention;
(d) The inventors have employed supercritical drying, freeze drying and ambient drying preparing aerogel, cryogel and xerogel respectively. The drying process was employed only after the regeneration of chitosan and washing with water until neutral medium and alcohol exchange. A wide range of porous (mesopore 2-50 nm and macropore >50 nm) materials were prepared;
(e) the materials were stable, sustainable to a wide range of pH medium and also to the vapors of different reagents. This property occurred just because of the aggregation of functionalized chitosan during regeneration in NaOH medium and removal of all the impurities and unreacted reagents;
(f) the water uptake was studied and the water uptake was solely happened due to the pure chitosan chains and functionalized chemical moiety, not because of the ammonium ions present in the material;
(g) homogeneous functionalized nanofibrillar networks of chitosan/ chitin were produced in the present invention. It is the solution based chemical modification of chitosan and then gelation of the solution/regeneration processes takes place.

In the present invention, the products were carefully analyzed and given the valid evidences confirming the position that was functionalized. The regenerated chitosan will have completely different properties than non-regenerated chitosan gels. The purification of the gels will be very important if the product will be employed in any application in order to keep the quality and reproducibility.

The new chemical derivatives of chitosan open porous materials are prepared in the present invention by nucleophilic addition reaction of amine functional group of chitosan with epoxy functional group of mono- or diglycidyl ether derivative of hydrophilic and/or hydrophobic agents. Specifically, a mono- or diglycidyl ether of hydrophilic agents may be employed. Specifically, a mono- or diglycidyl ether of hydrophobic agents may be employed. Specifically, a mono- or diglycidyl ether of an agent having both hydrophilic and hydrophobic functional groups may be employed.

A monoglycidyl ether in the sense of the present invention is a compound comprising at least one glycidyl group. A diglycidyl ether in the sense of the present invention is a compound comprising at least two glycidyl groups. The derivative of hydrophilic and/or hydrophobic agent may comprise additional glycidyl groups or expoxy groups.

In a preferred embodiment, the inventive open porous material of chitosan or chitin is obtainable by treating amine functional groups in chitosan with epoxy functional groups of poly(ethylene glycol) diglycidyl ether (PEGDGE), poly(propylene glycol) diglycidyl ether, (2-ethylhexyl)-glycidyl ether, tert-butyl glycidyl ether, diglycidyl 1,2-cyclohexanedicarboxylate, glycerol diglycidyl ether, poly(dimethylsiloxane) diglycidyl ether or mixtures thereof. The amine functional groups in chitosan may also be treated with epoxy functional groups of glycidyl ether-based epoxy resins.

Many of them are biocompatible, biodegradable and some of them are approved by Food and Drug Administration of the United States (FDA). For instance, the chemical spacer functional group - polyethylene glycol is non-toxic and approved for internal consumption by FDA.

In a preferred embodiment, the degree of substitution of the amine functional groups of chitosan is 50% or more, preferably 60% or more, more preferably 70% or more, particularly 80% or more. The degree of substitution may be up to 100% or below 100%, particularly below 90%, below 85% or below 70%.

In a preferred embodiment, the inventive open porous material of chitosan or chitin is in the form of monoliths, fibers, sheets, films and/or beads/µ-particles.

Fig. 1 illustratively depicts the addition reaction of poly(ethylene glycol) diglycidyl ether (PEGDGE) with chitosan. PEGDGE has two glycidyl ether functional groups on both terminals of the linear chain. Without the intention of being bound by theory, it is believed that the epoxy rings in glycidyl ether functional groups of PEGDGE can be opened by S_{N}1 reaction mechanism with the nucleophilic (-NH₂) addition reactions of chitosan on the β and β' position (as shown in Fig. 1). In the case of higher concentration of PEGDGE, there is high possibility of crosslinking reactions between two chitosan polymer chains.

Such crosslinking reactions have the advantage that they may improve the mechanical properties of the obtained porous materials.

Crosslinking requires the employment of diglycidyl ethers. In a preferred embodiment, the inventive open porous material of chitosan or chitin is thus obtainable by treating amine functional groups in chitosan with epoxy functional groups of diglycidyl ether derivatives of hydrophilic and/or hydrophobic agents, particularly with epoxy functional groups of poly(ethylene glycol) diglycidyl ether and/or poly(propylene glycol) diglycidyl ether, wherein the two epoxy functional groups of the diglycidyl ether derivate react with amine functional groups of different chitosan chains, wherein said chitosan chains are crosslinked via the diglycidyl ether derivative.

In an alternative embodiment, the object of the invention is solved by a method for the synthesis of open porous material of chitosan or chitin containing hydrophilic and/or hydrophobic groups, comprising the following steps:
a) Preparing a homogeneous aqueous solution of chitosan, a mono- or di-glycidyl ether derivative of a hydrophilic and/or hydrophobic agent and optionally an acid under inert gas in a closed vessel
b) Heating the solution to a temperature of 25 to 95 °C for at least 2 minutes
c) Cooling the solution to room temperature (25 °C)
d) Preparing a gel from the solution, optionally by drying the solution and/or by regenerating in an alkaline solution, particularly a solution of sodium hydroxide in water
e) Neutralizing the gel obtained by washing the gel with water until the gel becomes neutral
f) Optionally washing the gel several times with alcohol, particularly ethanol, and
g) Employing a drying process, particularly a drying process under supercritical conditions, an ambient drying process or a freeze-drying process.

Preferably, in step a) a non-oxidizing acid is employed. The molar ratio between epoxy unit per glycidyl ether derivate and chitosan monomer unit containing - NH₂ functional group is preferably in the range of from 0.01 to 800, particularly from 0.1 to 100. Preferably, the solution is heated in step b) to a temperature of 30 to 80 °C.

In a first step, an aqueous acidic solution of chitosan and a mono/di-glycidyl ether derivative is prepared under inert gas in a closed vessel. To this end, chitosan may be dissolved in an aqueous acetic solution. Chitosan may be employed in mixture with chitin. Chitosan is derivable from chitin by deacetylation, providing free amine functional groups. Preferably, the chitosan employed in the inventive method comprises different degree of amine functional group (∼ 75 - 99 %). Chitosan may be dissolved in a concentration in a range of from 0.0006 to 0.2 mol/L, preferably 0.006 to 0.06 mol/L, more preferably 0.009 to 0.03 mol/L.

The molecular mass of the chitosan employed may be in the range of from 5000 to 1000000 Dalton, preferably in the range of from 10000 to 800000 Dalton, particularly 100000 to 600000 Dalton.

For example, if chitosan with a molecular weight of 5000 g/mol is employed, a concentration of 15 to 25 wt% in water is suitable. If, for example, a chitosan with a molecular weight of 574900 Dalton is employed, a concentration of 1.5 to 6 wt% in water is suitable.

The pH value of the solution is preferably in a range of from 1 to 7, more preferably 2 to 5. The pH value is adjusted with an acid, preferably a non-oxidizing acid. Suitable acids comprise acetic acid, lactic acid, gluconic acid, phosphoric acid, citric acid, maleic acid, succinic acid and hydrochloric acid. Particularly preferred is acetic and/or lactic acid.

Alternatively, the pH value of the solution may be neutral. The required pH value depends on the solubility of the employed chitosan and glycidyl ether derivative. For example, if a 15% solution of an oligosaccharide of chitosan with a molecular weight of 5000 g/mol is used in combination with PEGDGE in a PEGDGE/chitosan ratio of 10, the aqueous solution may be in distilled water at a neutral pH.

The aqueous solution may optionally be mixed with an alcohol. Suitable alcohols comprise methanol, ethanol, isopropanol, dimethylacetamide, dimethylformamide, dimethylsulfoxide and mixtures thereof. The aqueous solution may particularly be mixed with an alcohol in an amount of from 5 to 60 wt%, preferably 25 to 50 wt%. Mixing with an alcohol is particularly preferred, in case a mono- or diglycidyl ether derivative is to be employed.

The aqueous acetic solution of chitosan is optionally filtered and subsequently saturated with an inert gas in a closed vessel. Suitable inert gases comprise nitrogen, carbon dioxide and argon gas. Afterwards, a mono- or diglycidyl ether derivative of a hydrophilic and/or hydrophobic agent is added under inert gas atmosphere. Suitable mono- or diglycidyl ether derivatives comprise poly(ethylene glycol) diglycidyl ether (PEGDGE), poly(propylene glycol) diglycidyl ether, (2-ethylhexyl)-glycidyl ether, tert-butyl glycidyl ether, diglycidyl 1,2-cyclohexanedicarboxylate, glycerol diglycidyl ether, poly(dimethylsiloxane) diglycidyl ether or mixtures thereof. Furthermore, glycidyl ether-based epoxy resins may be employed.

Particularly preferred is poly(ethylene glycol) di-glycidyl ether (PEGDGE). PEGDGE with a molecular weight of from 500 to 6000 g/mol, particularly 500 to 2000 g/mol, may be employed. The weight ratio between PEGDGE (molecular weight 500 g/mol) and chitosan (molecular weight 574,900 Dalton) is preferably in the range of from 0.1 to 20.

The mixing of chitosan with a mono- or diglycidyl ether derivative of a hydrophilic and/or hydrophobic agent is preferably performed at a low temperature, particularly at a temperature in a range of from 2 to 8 °C. The mixture can be further stirred in order to ensure a homogeneous mixture. Preferably the mixture is stirred at a temperature in a range of from 2 to 8 °C for a period of between 5 and 90 minutes, preferably 15 to 60 minutes, particularly 30 minutes.

The homogeneous aqueous solution of chitosan, a mono- or diglycidyl ether derivative of a hydrophilic and/or hydrophobic agent and optionally acid under inert gas in a closed vessel obtained in step a) is subsequently heated in step b) of the inventive method. The mixture is heated to a temperature in a range of from 25 to 95 °C, preferably in a range of from 40 to 80 °C, more preferably 50 to 80 °C. The temperature is maintained for at least 2 minutes, preferably 30 minutes, more preferably for at least 60 minutes, most preferably for at least 90 minutes. Preferably, the temperature is maintained for up to 6 days. For a higher temperature, a shorter reaction time may be sufficient, whereas for a lower temperature a longer reaction time may be necessary. A lower temperature has the advantage that the desired intermediate products with a lower degree of crosslinking can be collected by quenching the reaction with the addition of alkaline solution. A higher temperature has the advantage to reduce the reaction duration.

The temperature of the reaction medium has great influence on the reaction rate, because the ring opening reaction of the glycidyl ether derivative is directly affected by the temperature of the solution. At room temperature, the reaction may for example take up to 6 days. In comparison, at 50 °C the reaction may take place within 16 hours and at a temperature of 90 °C within 90 minutes.

Subsequently, the mixture is cooled to room temperature in step c) of the inventive method. Preferably, the pH value of the solution is adjusted to a value of between 7 to 15, more preferably 9 to 12. The pH adjustment may be performed by adding a base to the mixture, preferably an alkaline or ammoniac solution.

As next step, a gel (hydrogel) is prepared from the solution, optionally by drying the solution and/or by regenerating in an alkaline solution, particularly a solution of sodium hydroxide in water or an ammoniac solution. Subsequently, the gel obtained is neutralized by washing the gel with water until the gel becomes neutral.

The alkaline solution preferably has a pH value in a range of from 8 to 15, more preferably in a range of from 9 to 12. Suitable bases comprise sodium hydroxide, potassium hydroxide, ammoniac solution or mixtures thereof. Preferably, sodium hydroxide is used, particularly a solution of sodium hydroxide in water in a concentration of between 0.5 and 2 mol/L.

The procedure for preparing and neutralizing the gel may be chosen depending on the desired form of porous material of chitosan or chitin, since said form is determined by the way of gel formation.

In order to obtain the porous material in form of particles or beads, the solution obtained after step c) of the inventive method may be dropped into the aforementioned aqueous alkaline solution, preferably by using a syringe needle or tips of pipettes or a similar droplet making device. The regeneration period is preferably between 5 and 180 minutes, more preferably between 15 and 60 minutes. Subsequently, the beads/particles are isolated and washed with water until the filtrate has a neutral pH value.

In order to obtain the porous material in form of fibers, the solution obtained after step c) of the inventive method may be extruded with constant pressure through a nozzle system into the aqueous alkaline solution. After a regeneration period of between 5 and 180 minutes, preferably 15 to 60 minutes, the extruded fibers are collected and washed with water until the filtrate has a neutral pH value.

In order to obtain the porous material in form of sheets or films, a surface material may be dipped in the solution obtained after step c) of the inventive method and subsequently in the aforementioned aqueous alkaline solution, followed by washing with water until the gel obtained becomes neutral. Suitable surface materials comprise glass plates, granulates/plates of sand, metal and/or metal oxide surfaces.

Particularly, in order to obtain the porous material in form of sheets or films, a layer-by-layer deposition procedure may be employed. A prewashed dry plate of surface material, such as a glass plate, may be dipped in several cycles of solutions between (i) and (iv) in the following order: (i) the viscous clear solution obtained after step c) of the inventive method, preferably for 3 minutes; (ii) The coated plate is set to stand upright in an empty beaker in order to drain out the excess liquid, preferably for 3 to 5 minutes; (iii) Then the coated plate is dipped in the aforementioned alkaline solution, preferably for 3 minutes; (iv) The plate is set to stand upright in an empty beaker in order to drain out the excess liquid of alkaline solution, preferably for 3 to 5 minutes. After several cycles ending up in the step (iii), the sample plate is washed several times with water until the filtrate has a neutral pH value.

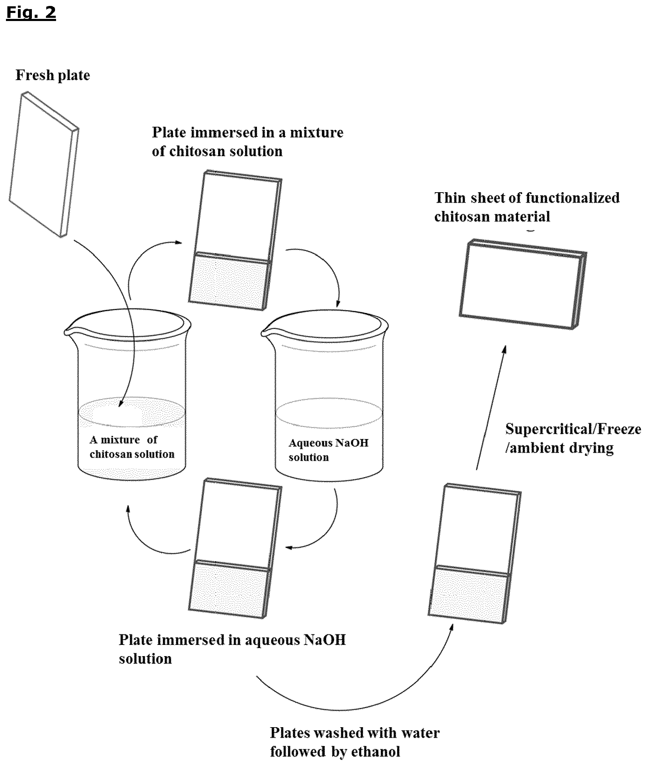

Fig. 2 illustratively depicts the described layer-by-layer deposition procedure.

In order to obtain the porous material in monolithic form, the solution obtained in step c) of the inventive method may be dried directly without any regeneration in an alkaline solution.

In case the solution obtained in step c) is a purely aqueous solution without any added alcohol, the solution may be heated to a temperature in a range of from 50 to 80 °C, preferably for more than 3 hours, first resulting in the formation of a semi-gel, follow by the formation of a gel. The gel may be washed with the aforementioned alkaline solution, optionally in mixture with an alcohol, preferably a 2:1 ethanol: water mixture.

In case the solution obtained in step c) contains an alcohol, the gelation may occur faster than for the purely water-based reaction medium. The solution obtained in step c) of the inventive method may particularly be heated below the boiling point of the alcohol, for example to 70 °C if ethanol is employed. The gelation is preferably performed in a period of between 30 to 180 minutes, more preferably between 45 to 60 minutes.

As an alternative to direct drying of the solution obtained in step c) of the inventive method, said solution may also be filled in a container such as a mold and be layered over with the aforementioned alkaline or ammoniac solution, wherein the solution may preferably be mixed with an alcohol such as ethanol.

The monolithic gel bodies obtained are washed several times with water until the filtrate has a neutral pH value. The hydrogels may be stored in pure water.

In the final steps of the inventive method, the neutralized gel is transformed to porous material of chitosan or chitin, particularly by further drying. The procedure may depend on the type of porous material intended.

In order to obtain an aerogel, the gel obtained in step e) of the inventive method may be employed in solvent exchange, i.e., the water medium in the hydrogel is exchanged with an alcohol, preferably with ethanol. To this purpose, the gel may be washed several times with the alcohol, preferably 5 to 8 times with ethanol. Finally, the gel in alcoholic medium is subjected to supercritical drying to obtain a functionalized chitosan aerogel. The product may be white in colour.

In order to obtain a cryogel, the gel obtained in step e) of the inventive method may be frozen to a temperature below -10 °C. Particularly the gel may be frozen to a temperature of -196 °C. The freezing may be performed stepwise or by rapid shock cooling. Particularly, the gel may be frozen at a temperature of - 196 °C in liquid nitrogen. The stepwise cooling may be performed in steps of 2 °C, -20 °C, -196 °C. By dipping the gel in liquid nitrogen, rapid shock cooling to -196 °C may be performed. Finally, the frozen gel is employed in a freeze-drying process in a freeze dryer to obtain a functionalized chitosan cryogel. The product may be white in colour.

In order to obtain a xerogel, the gel obtained in step e) of the inventive method may be employed in an ambient drying process. Optionally, before the drying process the gel may be employed in solvent exchange, i.e., the water medium in the hydrogel is exchanged with an alcohol, preferably with ethanol. To this purpose, the gel may be washed several times with the alcohol, preferably 5 to 8 times with ethanol. The resultant alcogel is employed in an ambient drying process in order to obtain a functionalized chitosan xerogel. The product may be of glassy yellow colour.

The products of functionalized chitosan obtained by the inventive method are not soluble in water (pH <1 to >14) and in common organic solvents such as acetonitrile, toluene, tetrahydrofuran, N-methyl pyrrolidone, dimethyl formamide, dimethyl sulfoxide, dimethyl acetamide and dioxane. It offers that the porous materials can be used as sustainable bio-based supporting materials in filters, purification and separation techniques and catalysis for many cycles.

It has been found that changing the form of aerogel (particles/beads, monolith and film) does not influence the specific surface area. It implies that the microstructure of the aerogels is not affected while changing the form of final material.

The same kind of polyethylene glycol-functionalized aerogels/Porous chitosan products can be produced can be produced after post gelation of chitosan by adding PEGDGE under alcohol medium and mild basic condition.

In an alternative embodiment, the object of the invention is solved by the use of the inventive porous material of chitosan or chitin in antimicrobial filters, water filters, water purification, air filters, masks, protein binding medium, separation and purification technologies, dye adsorption, antimicrobial agents, wound dressing, environmental control system, supporting materials for catalysis, chromatography, biomaterials or thermal and acoustic insulating materials.

### Examples

### Materials and methods:

All the functionalizing agents (mono- and diglycidyl ether derivatives) were purchased from Sigma Aldrich and used as received. Chitosan (95 % deacetylated) was purchased from Glentham Life Sciences Ltd. Chitosan (>75% deacetylated) was Purchased from Sigma Aldrich. Sodium hydroxide pellets and ammonium hydroxide solution (28-30 %) were purchased from Merck GmbH. The products were characterized by envelope density measurement (Micromeritics - GeoPyc 1360), skeletal density (Micromeritics - Accupyc II 1340; Gas pycnometer - Helium), BET nitrogen adsorption-desorption isotherm analysis (Micromeritics - Tristar II 3020), Thermogravimetric analyses (Netzsch - TG 209 F1), Fourier transform infrared spectroscopy (FTIR; Bruker-Tensor 27 instrument) and scanning electron microscopy (SEM: Merlin - Carl Zeiss Microscope; gold sputtered samples). The XRD measurements of monolithic and powder samples were performed on a Bruker D8 DISCOVER diffractometer using Cu-Kα radiation (λ = 1.54 °A). For all the syntheses and washing processes deionized water was employed. Ethanol was used as a suitable solvent to replace water in hydrogels. Ethanol acts as good solvent medium in order to go through the supercritical drying process. Solid-state NMR analyses were carried out with a Bruker 400 WB spectrometer operating at a proton frequency of 400.13 MHz NMR spectra were acquired with cp and proton decoupled sp pulse sequences under the following conditions: ¹³C NMR frequency=100.48 MHz, p/2 pulse 3.7 ms, decoupling length 6.3 ms, recycle delay: 60 s, 2000 scans. Adamantane (δ-CH₂ group at 38.5 ppm) was used as external secondary references.

### Synthesis of PEGDGE-functionalized chitosan solution in aqueous medium

A homogeneous clear solution of chitosan was prepared by dissolving 3 g of chitosan (average molecular weight 574900 g/mol, 95 % deacetylated, purchased from Glentham Life Sciences Ltd.) in 97 mL of an aqueous acetic acid solution (0.5 M). The viscous solution was filtered through Whatman® filter paper, saturated with nitrogen gas and then mixed with PEGDGE (poly(ethylene glycol) diglycidyl ether; molecular weight 500 g/mol) under vigorous stirring at cold condition (2 - 8 °C). The weight ratio between PEGDGE and chitosan was varied between 0.1 and 20. The solution was further stirred at room temperature for 30 minutes. After heating the homogeneous mixture at 80 °C for 90 minutes, the solution was cooled to room temperature. The pH of the final solution was raised to 3.5-4.5.

The following solutions were prepared:

| **Solution** | **Weight ratio PEGDGE:chitosan** |
|---|---|
| V1 | 0 |
| V2 | 1 |
| V3 | 2 |
| V4 | 3 |
| V5 | 4 |
| V6 | 5 |
| V7 | 6 |
| V8 | 7 |
| V9 | 8 |
| V10 | 10 |
| V11 | 20 |

### Rheological property of PEGDGE-functionalized chitosan solution

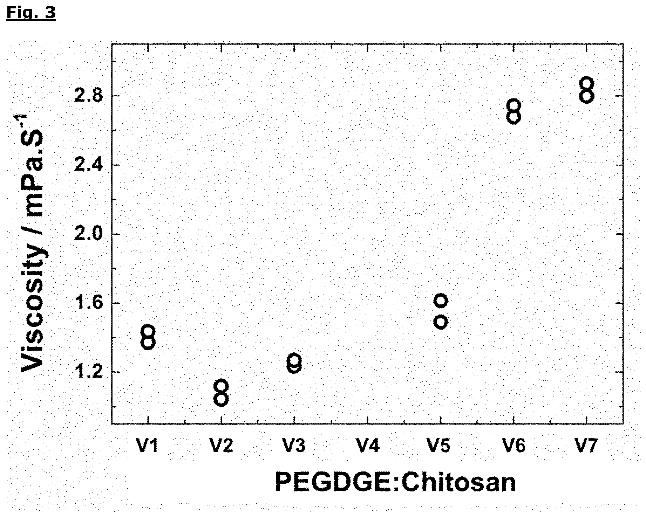

The kind of addition reaction of PEGDGE with chitosan was followed by rheological properties of the reaction mixture from solution V1 to V7. Fig. 3 shows the comparison data of static shear viscosity of chitosan solution obtained from solution V1 to V7. The viscosity of chitosan solution V1 (3 wt%) was about 1.4 mPa.s⁻¹. By the addition reaction of PEGDGE to chitosan, when the ratio between PEGDGE and chitosan was 1 (V2), the viscosity was decreased below the viscosity of chitosan because of the high-water affinity of PEGDGE chains. In other case, the viscosity of the reaction mixture was increased more than the viscosity of chitosan when the ratio of PEGDGE and chitosan was ≥ 4 (V5 to V7). This indicates that the addition reaction turns to be inter-crosslinking the chitosan chains when the ratio of PEGDGE and chitosan increases (see crosslinked product in Fig. 1).

### Examples 1 to 11: Synthesis of porous materials of chitosan

PEGDGE-functionalized chitosan products were collected from solutions V1 to V11 by neutralizing the reaction mixture with sodium hydroxide, washing with water until neutralization and followed by solvent exchange with ethanol and drying at supercritical condition. The dried samples were then further dried under vacuum at 60 °C for 90 minutes. The following porous materials were produced:

| Example | Prepared from solution |
|---|---|
| 1* | V1 |
| 2 | V2 |
| 3 | V3 |
| 4 | V4 |
| 5 | V5 |
| 6 | V6 |
| 7 | V7 |
| 8 | V8 |
| 9 | V9 |
| 10 | V10 |
| 11 | V11 |

| | |
|---|---|
| * Reference Example | |

### Characterization of FTIR, ¹³C-CPMAS NMR and powder XRD data of PEGDGE-functionalized chitosan

The samples of Examples 1 to 9 were analyzed by FTIR, ¹³C-CPMAS NMR and powder XRD and compared.

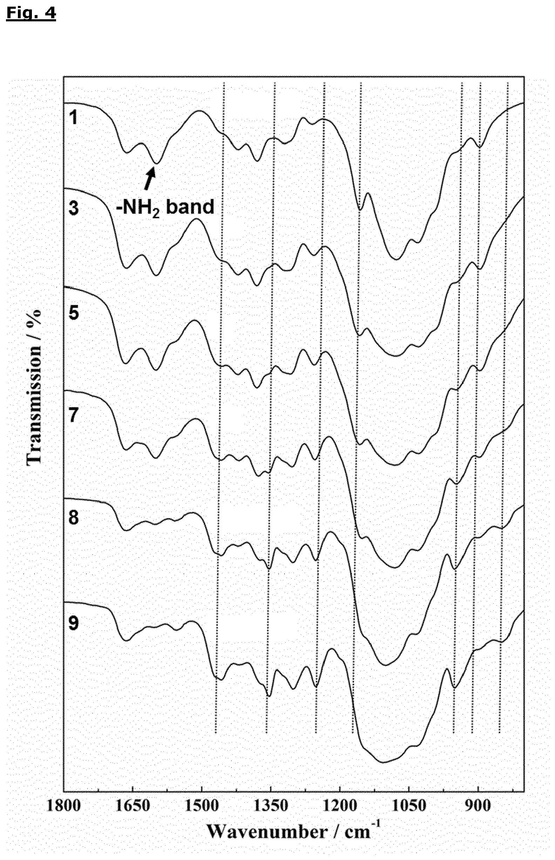

The degree of PEGDGE reaction with chitosan was followed by FTIR spectroscopy. Fig. 4 shows FTIR spectroscopy data of PEGDGE-functionalized chitosan at different concentration of PEGDGE:Chitosan of Examples 1 to 9. The dotted lines indicate the changes in the spectra after.

**Table 1: The assignment of vibrational bands of chitosan (∼95 % deacetylated) aerogel (Example 1) and aerogel of PEGDGE-functionalized chitosan (Examples 2 to 9). In this Table, (s) stands for shoulder peak.**

| FTIR Vibration bands | Example | | | | | |
|---|---|---|---|---|---|---|
| | 1 | 3 | 5 | 7 | 8 | 9 |
| O6-H | 3449 | 3442 | 3444 | | | |
| O3-H | 3419 | 3422 | 3423 | 3421 | 3422 | 3421 |
| N-H | 3379 | 3385 | 3385 | | 3379 (s) | |
| C-H symmetric stretching | 2920 | 2920 | 2919 | 2916 | 2910 (s) | 2913 (s) |
| C-H asymmetric stretching | 2879 | 2876 | 2876 | 2873 | 2874 | 2873 |
| Amide I | 1662 | 1664 | 1666 | 1663 | 1658 | 1655 |
| NH₂ - scissoring | 1598 | 1599 | 1599 | 1600 | 1603 | |
| Amide II | | 1557 (s) | 1556 (s) | 1557 (s) | 1560 | 1557 |
| C-H bending | | 1458 (s) | 1457 | 1457 | 1457 | 1459 |
| C-H wagging; C-H bending | 1421 | 1421 | 1422 | 1420 | 1421 | 1419 |
| C-H wagging | 1380 | 1381 | 1380 | 1377 | 1373 | 1375 (s) |
| CH₂ twisting; CH₂ wagging | | 1353 (s) | 1357 (s) | 1355 | 1353 | 1354 |
| CH₂ twisting | 1321 | 1318 | 1322 (s) | 1322 (s) | 1325 | |
| | | | 1308 | 1304 | 1303 | 1302 |
| O-H bend and NH₂ twist and C-N stretch | 1260 | 1257 | 1254 | 1254 | 1252 | 1252 |
| C-O-C bridge - Asymm stretching | 1155 | 1157 | 1156 | 1152 | 1144 (s) | 1144 (s) |
| C-O-H stretching and C-O-C stretching from PEGDGE | 1077 | 1079 | 1079 | 1081 | 1100 | 1104 |
| C-C stretch; CH₂ rock | 1032 | 1029 | 1031 | 1032 | 1035 | 1036 |
| CH₂ rock; C-C stretching | | 948 (s) | 950 | 947 | 950 | 950 |
| Ring stretch | 897 | 898 | 896 | 898 | 898 | 898 (s) |
| CH₂ rock; C-O stretch | | | | | 849 | 849 |
| O-C-H | | | | | 744 | 739 |

The shoulder peak at 1660 cm⁻¹ is assigned for 5 % of -NH-C(O)-CH₃ group of chitosan. The addition reaction of PEGDGE with chitosan was confirmed by following the intensity of vibrational band of -NH₂ group at ∼ 1598 cm⁻¹ (indicated by an arrow in Fig. 4). By increasing the ratio between PEGDGE and chitosan, the intensity of vibrational band of chitosan decreases, especially the vibrational band of -NH₂ group and the vibrational bands of PEGDGE increase. The changes observed in the spectra are marked with the dotted lines in Fig. 4. The detailed assignment of vibrational bands is listed in Table 1. The degree of reaction was analyzed with the integral values of the vibrational bands at 1598 cm⁻¹ (-NH₂ band) and 1551 cm⁻¹ (assigned to amide II band, ∼5% from commercial chitosan). The results showed that the degree of reaction was about 70 % and 30 % of -NH₂ group present as unreacted.

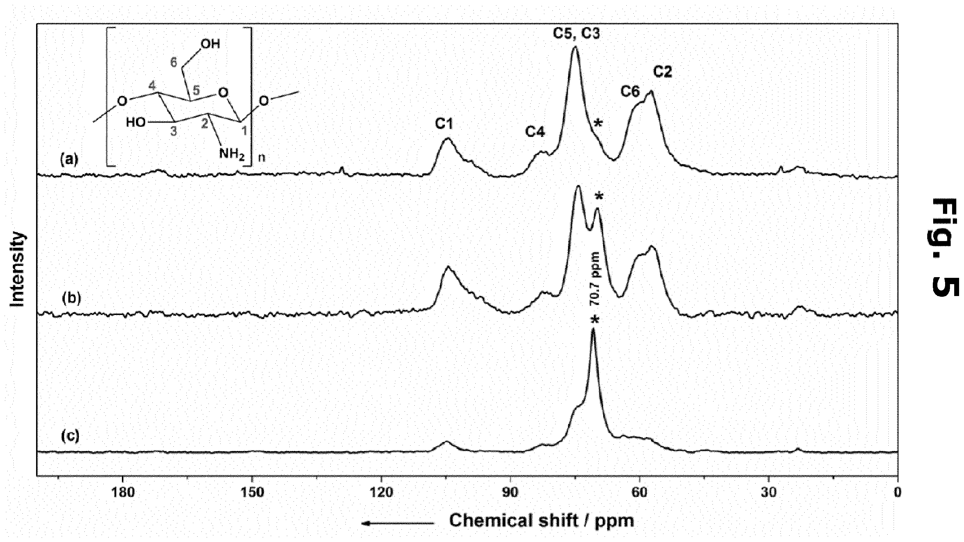

The solid state CPMAS ¹³C-NMR data of PEGDGE-functionalized chitosan was compared. Fig. 5 shows a comparison of solid-state CP-MAS ¹³C NMR of functionalized chitosan for Example 3 (a), Example 5 (b) and Example 9 (c). The peak at 70.7 ppm was assigned to ethylene oxide (repeating unit) indicated by (*). By increasing the reaction condition and the concentration of PEGDGE, the peak at 70.7 ppm corresponding to ethylene oxide (-O-CH₂-CH₂-) increased which was indicated in Fig. 5. Except ethylene oxide peak, most of the peaks of PEGDGE were overlapped with the chitosan peaks.

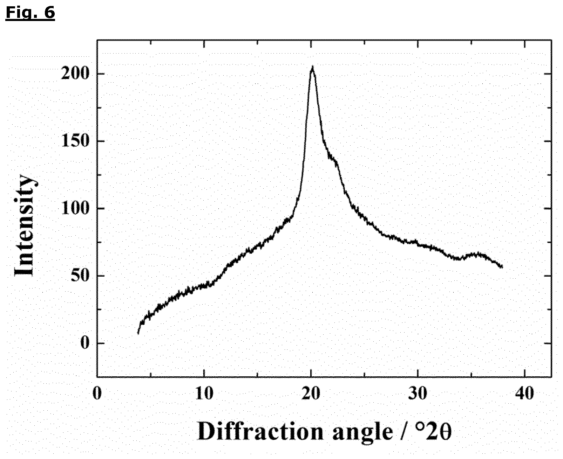

The addition reaction of PEGDGE with chitosan did not affect the crystallinity of chitosan which was confirmed by powder XRD. Fig. 6 shows a corresponding powder X-ray diffraction pattern for Example 7.

### Physical properties of aerogels of PEGDGE-functionalized chitosan

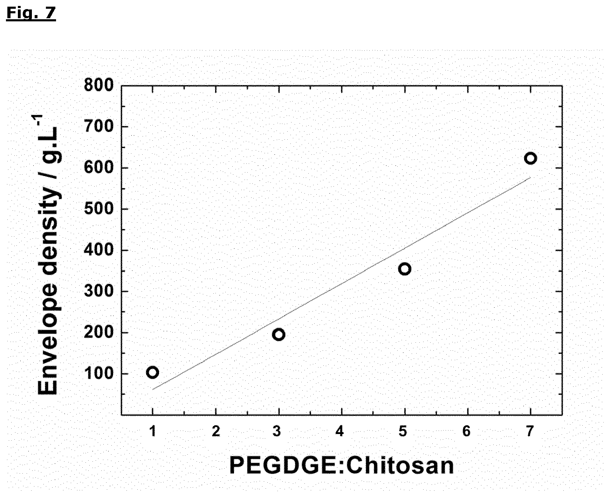

Skeletal density of commercial chitosan (95%) was about 1447 g.L⁻¹. Example 9 showed less skeletal density about 1356 g.L⁻¹ and changed the chitosan polymer skeletal property whereas the skeletal density was 1489 g.L⁻¹ for Example 4. The bulk or envelope density of the monolithic aerogels shows a linear relationship with the ratio of PEGDGE:chitosan. The envelope density of Example 1 was about 103 g.L⁻¹. By increasing the concentration of PEGDGE, the envelope density linearly increases. Fig. 7 shows the envelope density of monoliths of aerogels of Examples 1 to 7 showing linear relationship with the concentration of PEGDGE.

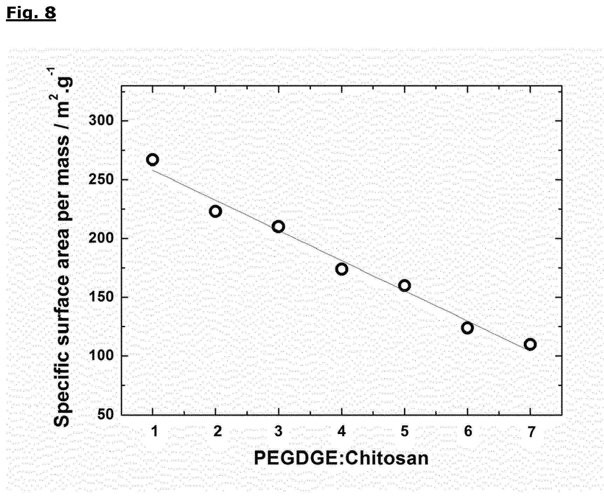

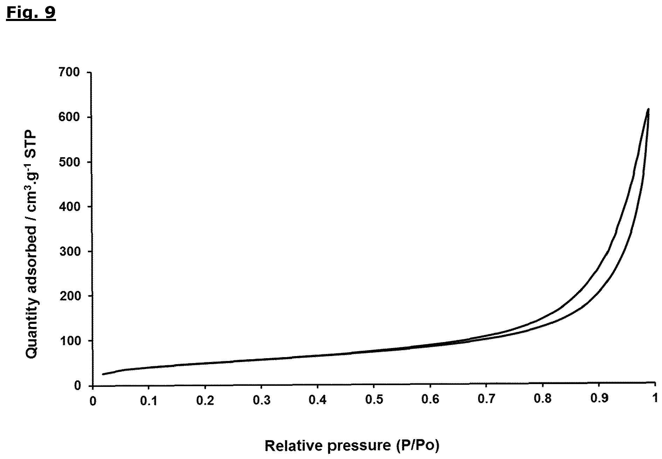

The specific surface area of aerogels showed a trend of linear relationship with PEGDGE:chitosan ratio. For the Example 1 the specific surface area was about 267 m² g⁻¹. By increasing the concentration of PEGDGE in aerogels, the specific surface area was linearly decreased. Fig. 8 shows the BET specific surface area of aerogels of Examples 1 to 7. For the concentration ratio of PEGDGE:chitosan was 6 (Example 7), the specific surface area was 110 m² g⁻¹. For all the samples, the type IV isotherm curve was observed. Fig. 9 depicts the nitrogen adsorption-desorption isotherm obtained from aerogel with concentration ratio of PEGDGE:chitosan = 3 (Example 4).

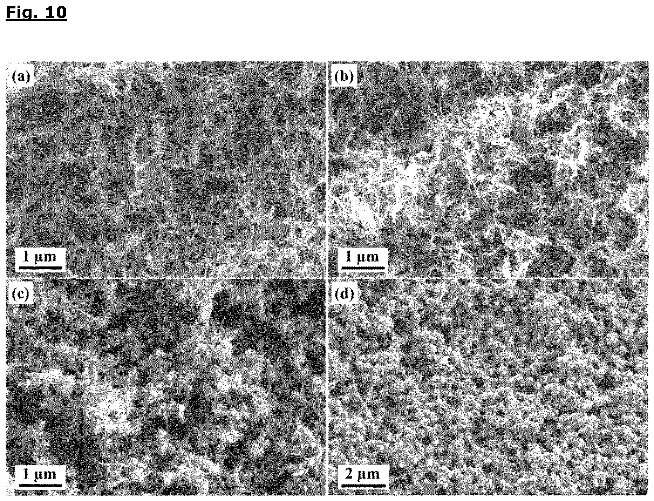

The scanning electron microscopy images of aerogels were analyzed from the fractured surface. Fig. 10 depicts scanning electron microscopy images of aerogels prepared with a concentration ratio of PEGDGE:chitosan: (a) 0, (b) 2, (c) 4 and (d) 6, corresponding to Example 1 (a), Example 3 (b), Example 5 (c) and Example 7 (d), respectively. The microstructure exhibited the interconnected nano-felt fiber structure for pure chitosan aerogel (Fig. 10 (a)) and for the functionalized aerogel obtained from the concentration ratio of PEGDGE:chitosan = 1, 2 (Fig. 10 (b)), 3 and 4 (Fig. 10 (c)). When the concentration ratio between PEGDGE and chitosan was increased to 5 or 6, the representative image of aerogels (in Fig. 10 (d)) showed aggregated fiber structure.

### Example 12: Synthesis of micro-fiber samples of PEGDGE-functionalized chitosan

Micro-fiber samples of PEGDGE-functionalized chitosan were prepared from solution V6. Solution V6 was extruded with constant pressure through a nozzle system into a solution of sodium hydroxide in water (2 M). After 15 minutes of regeneration time, the extruded fibers were collected and washed with water until the filtrate had a neutral pH value.

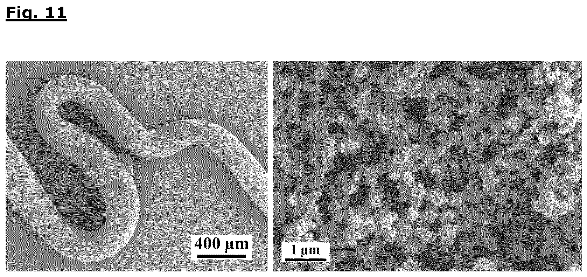

The inner structure of micro-fiber samples of PEGDGE-functionalized chitosan prepared showed the aggregated nano-felt fiber structure. Fig. 11 depicts scanning electron microscopy images of the prepared micro-fiber samples of PEGDGE-functionalized.

### Example 13: Synthesis of derivatives of chitosan with other functionalizing agents

Monolithic/Sheet form of aerogels: A homogeneous clear solution of chitosan was prepared by dissolving 3 g of chitosan (Glentham Life Sciences Ltd.; degree of deacetylation 95%; average molecular weight 574900 g/mol) in 97 mL of a 1:1 (wt%) mixture of water and ethanol having 0.5 M acetic acid. The viscous solution was filtered through Whatman® filter paper, saturated with nitrogen gas and then mixed with 30 g PPGDGE (poly(propylene glycol) diglycidyl ether; molecular weight 640 g/mol) under vigorous stirring at cold condition (2 - 8 °C). The solution was further stirred at room temperature for 15 minutes. Then it was transferred to the mold with different thickness (sheets: 5 cm diameter and 2 mm height; monolith: 5 cm diameter and 3 cm height). After heating the homogeneous mixture at 40 °C for 48 h, the gel body was cooled to room temperature and washed with 2 M of sodium hydroxide solution in a 1:1 mixture of water and ethanol. Afterwards, the gel was washed several times with water followed by solvent exchange with ethanol and the alcogels thus obtained were employed for supercritical drying.

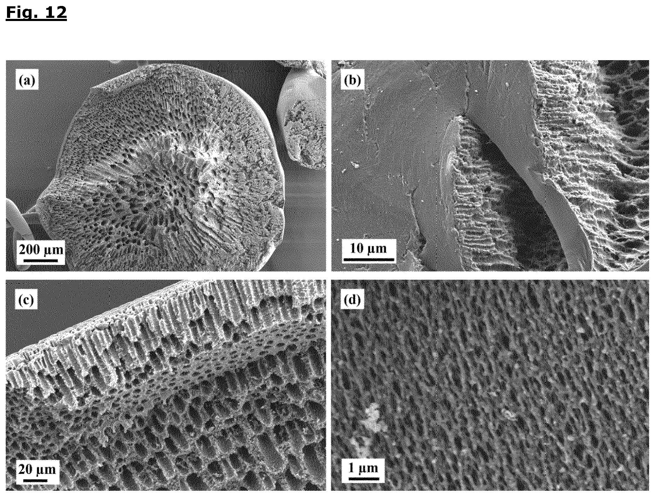

Beads form: The weight concentration ratio of PPGDGE and Chitosan of 5. The ethanol and water mixture in the chitosan solution preparation was 1:0.8 wt%. The reaction temperature was 50 °C and heated up to 90 minutes. After reaction period, the solution was used for beads production by dropping the solution into the 2M of sodium hydroxide solution in a 1:1 mixture of water and ethanol. The SEM images shown in Figure 12 belong to beads form.

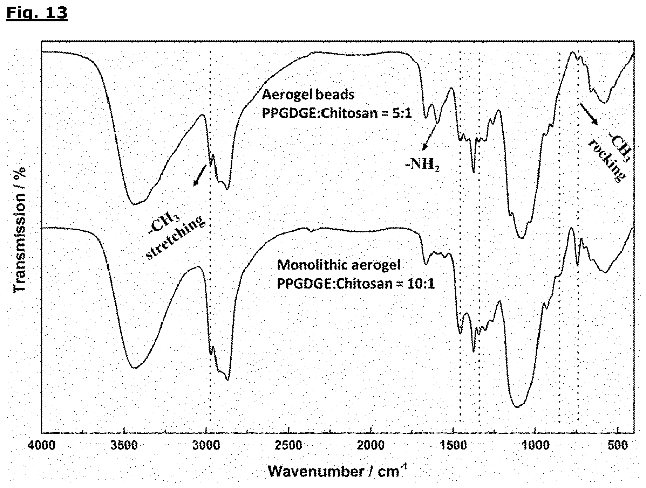

The obtained bead derivatives of chitosan with PPGDGE (Example 13) were confirmed to show the same kind of nanofibrillar network in their microstructure. Fig. 12 shows the scanning electron microscopy structure of PPGDGE-functionalized chitosan aerogel beads. Interestingly, the microstructure of aerogel beads of chitosan derivatives showed core-shell structure having dual porous channels (Figure 12a). The shell structure was formed once the droplet of chitosan solution reached the sodium hydroxide bath containing ethanol. The shell seemed to be homogeneous (Figure 12b) and the diffusion of ions into the core of the droplet started producing the phase separated layers (microstructure close to surface shell in Figure 12c). This separation of layers leads to macropore channels formation and the surface of the channels have the aggregated nanofibrillar network (Figure 12d). From the shell to the middle of the core, the channels grew radially and the macropore channels size increased from 1 to 60 µm.
The aerogels of monolithic and beads form were analyzed with FTIR analysis. FTIR showed the strong vibrational bands of -CH₃, methylene functional group of PPGDGE (see Figure 13).

The above procedure for the preparation of bead derivatives of chitosan with PPGDGE was repeated employing PPGDGE with a molecular weight of 380 g/mol. For the lower molecular weight of PPGDGE, the aerogel beads showed the same hierarchical porous structure. There was difference in specific surface area. It was 190 m²/g for the lower molecular weight PPGDGE-functionalized chitosan aerogel beads whereas it was 163 m²/g for the higher molecular weight PPGDGE-functionalized aerogel beads.

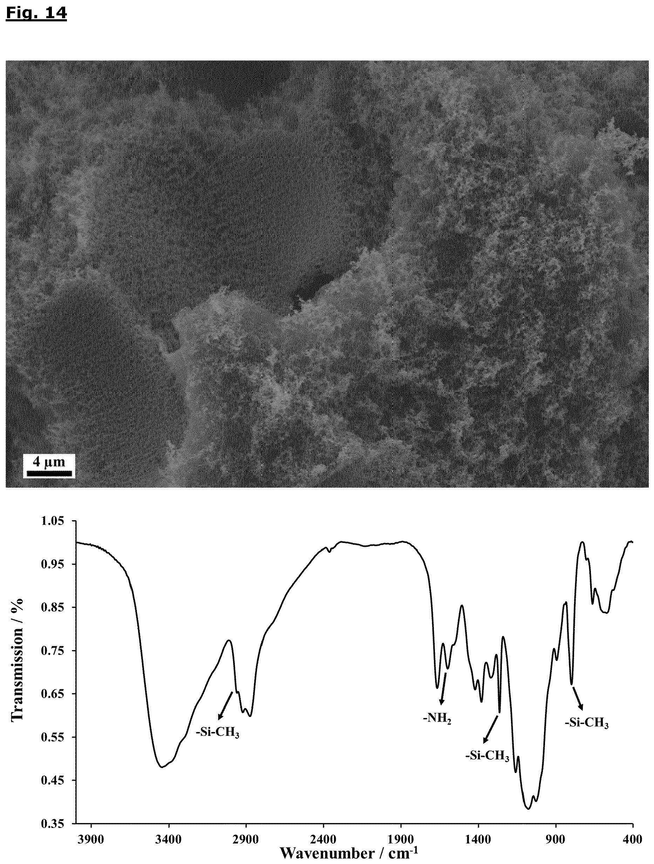

The same aerogel beads production procedure was used for PDMSDGE (polydimethylsiloxane diglycidyl ether)-functionalized chitosan products. Chitosan concentration of 2 wt% (deacetalytion > 75 %; Sigma Aldrich) was employed. The weight concentration ratio of PDMSDGE and Chitosan was 10. The isopropanol and water mixture in the chitosan solution preparation was 3:2 wt%. The reaction temperature was 50 °C and heated up to 90 minutes. After reaction period, there was phase separation: bottom layer of unreacted PDMSDGE and the top layer of chitosan solution. The chitosan solution was isolated and used for beads production by dropping the solution into the 1M of sodium hydroxide solution in a 1:0.3 mixture of water and isopropanol. The SEM and FTIR images shown in Figure 14 belong to beads form. SEM image showed finely distributed nanofibrillar structure and some macropore channels. FTIR showed strong vibrational bands of dimethylsiloxane which was indicated with an arrow. The intensity of -NH₂ vibrational band at 1598 cm⁻¹ decreased after reaction. The BET specific surface area was 221 m²/g.

### Example 14: Influence of mixing two different functionalizing agents

A homogeneous clear solution of chitosan was prepared by dissolving 3 g of chitosan (average molecular weight 574900 g/mol, 95 % deacetylated, purchased from Glentham Life Sciences Ltd.) in 97 mL of an aqueous acetic acid solution (0.5 M). The viscous solution was filtered through Whatman® filter paper, saturated with nitrogen gas and then mixed with 6 g PEGDGE (poly(ethylene glycol) diglycidyl ether; molecular weight 500 g/mol) and 3 g PPGDGE (poly(propylene glycol) diglycidyl ether; molecular weight 640 g/mol) under vigorous stirring at cold condition (2 - 8 °C). The solution was further stirred at room temperature for 30 minutes. After heating the homogeneous mixture at 80 °C for 90 minutes, the solution was cooled to room temperature. The solution was used for beads production by dropping the solution into the 2M of sodium hydroxide solution in a 1:1 mixture of water and ethanol. Afterwards, the gel was washed several times with water followed by solvent exchange with ethanol and the alcogels thus obtained were employed for supercritical drying.

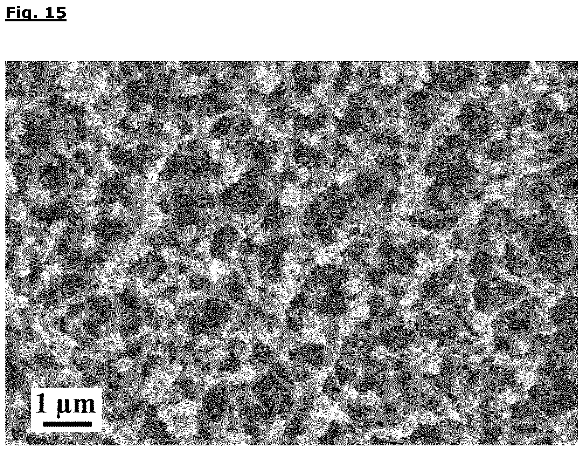

Fig. 15 shows the scanning electron microscopy of PEGDGE- and PPGDGE-functionalized chitosan aerogel beads. As the PEGDGE concentration was higher than PPGDGE, the microstructure of derivative of chitosan aerogel did not provide the core-shell structure; instead it showed the usual homogeneous microstructure (aggregated nanofibrillar structure) (see Fig. 15). In comparison with Figure 10b (SEM image of Example 3), the microstructure was changed by mixing PPGDGE. In comparison with the BET specific surface area of aerogel beads obtained by Example 3 (203 m²/g), the PEGDGE- and PPGDGE functionalized aerogel beads showed lower specific surface area which was about 185 m2/g.

### Water adsorption

The PEGDGE-functionalized aerogel beads prepared from solution V7 (Example 7) and xerogel beads from the same solution were employed in water adsorption tests.
Xerogel beads were prepared from the gel body containing ethanol by simply exposing the gels to ambient conditions. After confirming no change in mass, the xerogel beads were dried in vacuum oven at 50 °C for 90 minutes in order to remove any traces of solvent vapours. Xerogels showed 95 % of volume shrinkage from its original hydrogel volume. Aerogel beads obtained in Example 7 were used.

The aerogel of PEGDGE-functionalized chitosan in contact with water loses it shape and shrinks whereas xerogel of PEGDGE-functionalized chitosan swells 3 times of its volume. The water adsorption of xerogels was delayed by 30 minutes to achieve complete swelling until no change in shape occurred. This water adsorption can be repeated for many cycles by drying under ambient condition and swelling in water again. There was no change in its capacity.

Chitosan open porous materials containing hydrophilic and/or hydro-phobic functional groups Differences in the state of the art.

## Claims

1. Open porous material of chitosan or chitin containing hydrophilic and/or hydrophobic groups, wherein the material is obtainable by treating amine functional groups in chitosan with epoxy functional groups of mono- and/or diglycidyl ether derivatives of hydrophilic and/or hydrophobic agents and subsequently forming an open porous material from said chitosan or chitin.

2. Open porous material of chitosan or chitin according to claim 1, **characterized in that** the open porous material is an aerogel, a cryogel or a xerogel.

3. Open porous material of chitosan or chitin according to claim 1 or 2, **characterized in that** the degree of substitution of the amine functional groups of chitosan or chitin is 50% or more, particularly 70% or more.

4. Open porous material of chitosan or chitin according to one or more of claims 1 to 3, **characterized in that** the material is obtainable by treating amine functional groups in chitosan with epoxy functional groups of poly(ethylene glycol) diglycidyl ether, poly(propylene glycol) diglycidyl ether, (2-ethylhexyl)-glycidyl ether, tert-butyl glycidyl ether, diglycidyl 1,2-cyclohexanedicarboxylate, glycerol diglycidyl ether, poly(dimethylsiloxane) diglycidyl ether, and poly(propylene glycol) diglycidyl ether or mixtures thereof.

5. Open porous material of chitosan or chitin according to one or more of claims 1 to 4, **characterized in that** the material is in the form of monoliths, fibers, sheets, films and/or beads/µ-particles.

6. Open porous material of chitosan or chitin according to one or more of claims 1 to 5, **characterized in that** the material is obtainable by treating amine functional groups in chitosan with epoxy functional groups of diglycidyl ether derivatives of hydrophilic and/or hydrophobic agents, particularly with epoxy functional groups of poly(ethylene glycol) diglycidyl ether and/or poly(propylene glycol) diglycidyl ether, wherein the two epoxy functional groups of the diglycidyl ether derivate react with amine functional groups of different chitosan chains, wherein said chitosan chains are crosslinked via the diglycidyl ether derivative.

7. Method for the syntheses of open porous material of chitosan or chitin containing hydrophilic and/or hydrophobic groups, comprising the following steps:
a) Preparing a homogeneous aqueous solution of chitosan, a mono- or di-glycidyl ether derivative of a hydrophilic and/or hydrophobic agent and acid under inert gas in a closed vessel
b) Heating the solution to a temperature of 25 to 95 °C for at least 2 minutes
c) Cooling the solution to room temperature (25 °C)
d) Preparing a gel from the solution, optionally by drying the solution and/or by regenerating in an alkaline solution, particularly a solution of sodium hydroxide in water
e) Neutralizing the gel obtained by washing the gel with water until the gel becomes neutral
f) Optionally washing the gel several times with alcohol, particularly ethanol, and
g) Employing a drying process, particularly a drying process under supercritical conditions, an ambient drying process or a freeze-drying process.

8. Method for the synthesis of open porous material of chitosan or chitin containing hydrophilic and/or hydrophobic groups according to claim 7, **characterized in that** in step a) a non-oxidizing acid is employed.

9. Method for the synthesis of open porous material of chitosan or chitin containing hydrophilic and/or hydrophobic groups according to claim 7 or 8, **characterized in that** the molar ratio between epoxy unit per glycidyl ether derivate and chitosan monomer unit containing -NH₂ functional group is preferably in the range of from 0.01 to 800, particularly from 0.1 to 100.

10. Method for the synthesis of open porous material of chitosan or chitin containing hydrophilic and/or hydrophobic groups according to one or more of claims 7 to 9, **characterized in that** the solution is heated in step b) to a temperature of 40 to 80 °C.

11. Use of a porous material of chitosan or chitin according to one or more of claims 1 to 6 in antimicrobial filters, water filters, water purification, air filters, masks, protein binding medium, separation and purification technologies, dye adsorption, antimicrobial agents, wound dressing, environmental control system, supporting materials for catalysis, chromatography, biomaterials or thermal and acoustic insulating materials.
